# DEMANDE DE BREVET EUROPEEN

(11) **EP 3 418 517 A1**
(43) Date de publication de la demande: **26.12.2018**
(21) Numéro de dépôt: 18178622.9
(22) Date de dépôt: 19.06.2018
(51) Int. Cl.: F01N 3/10, F01N 3/20, F01N 9/00, F02M 26/37, F02M 26/15, F02M 26/16, F02M 26/34

(54) **GROUPE MOTOPROPULSEUR DOTÉ D'UN DISPOSITIF DE DÉPOLLUTION PERFORMANT ET PROCÉDÉ DE CONTRÔLE ASSOCIÉ**

(30) Priorité: 20.06.2017 FR 1755594
(71) Demandeur: RENAULT s.a.s., 92100 Boulogne-Billancourt (FR)
(72) Inventeur: ENE, Marius Daniel, BUCAREST (RO); GUILLOUZIC, Yannick, Ilfov (RO)

(57) **Abrégé**

L'invention se rapporte à un groupe motopropulseur (1) d'un véhicule comprenant un moteur à combustion interne et un circuit d'échappement (2) des gaz en provenance dudit moteur, ledit circuit comportant un catalyseur (4).

La principale caractéristique d'un groupe motopropulseur selon l'invention est qu'il comprend un circuit de dérivation (6) des gaz d'échappement, prenant naissance en aval (7) du catalyseur (4) et débouchant dans le circuit d'échappement (2) en amont dudit catalyseur (4), et en ce que le circuit de dérivation (6) comprend un compresseur (8) et un réservoir (9) positionné en aval dudit compresseur (8), ledit circuit de dérivation (6) étant destiné à stocker des gaz d'échappement ayant traversé le catalyseur (4) lorsque celui-ci n'est pas encore amorcé, et à réinjecter ces gaz comprimés en amont du catalyseur (4) lorsqu'il est suffisamment efficace.

## Description

L'invention a pour objet un groupe motopropulseur doté d'un dispositif de dépollution performant. Elle concerne également un procédé de contrôle du dispositif.

Dans le cadre de l'invention, le groupe motopropulseur comprend un circuit d'alimentation en air frais, un moteur à combustion interne et un circuit d'échappement des gaz en provenance dudit moteur.

D'une manière générale, les moteurs à combustion interne posent des problèmes de dépollution à froid, car leurs systèmes de dépollution des gaz de combustion, par exemple un catalyseur trois voies pour un moteur à essence ou un catalyseur d'oxydation pour un moteur diesel, ne sont pas efficaces en dessous d'une température minimale dite "température d'amorçage", typiquement de l'ordre de 350°C.

On connait de l'état de la technique plusieurs documents décrivant des procédés et/ou des dispositifs de chauffage d'un catalyseur.

Par exemple, le document FR2934638 divulgue un procédé de chauffage d'un catalyseur à l'échappement d'un moteur, grâce à l'injection d'air à l'échappement. Toutefois, la mise en action du catalyseur, c'est à dire sa mise en chauffe, reste longue et l'apport d'oxygène à l'échappement perturbe la régulation de richesse du moteur.

Le document US6223846 propose d'équiper un véhicule d'un réservoir d'air comprimé pour entraîner le moteur en compression, sans injection de carburant, et de ne démarrer le moteur à combustion interne uniquement lorsque la température est suffisante. Toutefois, la taille de réservoir doit être très importante pour entraîner le véhicule grâce à la seule énergie pneumatique, et n'est donc pas compatible avec un véhicule automobile.

Les groupes motopropulseurs selon l'invention permettent une mise en chauffe, ou mise en action, des catalyseurs de moteurs pour qu'ils atteignent le plus rapidement possible un rendement de dépollution satisfaisant, tout en s'affranchissant des inconvénients relevés dans l'état de la technique.

Un autre objectif de l'invention est de réduire la quantité de métaux précieux dans le système de post-traitement, qui est jusqu'à présent dimensionné en tenant compte de la mauvaise performance de catalyse en phase froide, c'est à dire pour une température des gaz échappement inférieure à 350°C, ce qui conduit à un surdosage en métaux précieux.

L'invention a pour objet un groupe motopropulseur d'un véhicule comprenant un moteur et un circuit d'échappement des gaz en provenance dudit moteur, ledit circuit comportant un catalyseur. Elle a aussi pour objet un procédé de contrôle d'un tel groupe motopropulseur.

La principale caractéristique d'un groupe motopropulseur selon l'invention, est qu'il comprend un circuit de dérivation des gaz d'échappement, prenant naissance dans le circuit d'échappement en aval du catalyseur et débouchant dans ledit circuit d'échappement en amont dudit catalyseur, le circuit de dérivation comprenant un compresseur et un réservoir positionné en aval dudit compresseur, ledit circuit de dérivation étant destiné à injecter des gaz d'échappement comprimés en amont du catalyseur. Autrement dit, le circuit de dérivation va réinjecter dans le circuit d'échappement des gaz d'échappement comprimés qui auront déjà traversé une première fois le catalyseur. Les termes « amont » et « aval » doivent être pris en considération par rapport au sens de circulation des gaz d'échappement, soit dans le circuit d'échappement, soit dans le circuit de dérivation.

Ce circuit de dérivation a pour fonction de comprimer les gaz d'échappement prélevés en aval du catalyseur lorsque la température d'amorçage n'est pas atteinte, c'est-à-dire lorsque lesdits gaz ne sont pas, ou pas suffisamment, dépollués, afin de les stocker dans un réservoir pour éviter de les rejeter dans l'atmosphère extérieure. Il a aussi pour fonction de les réinjecter au moment opportun en amont du catalyseur, c'est-à-dire lorsque la température est suffisamment élevée, dans le but de dépolluer ces gaz lorsque l'efficacité du catalyseur est devenue suffisante et de rejeter dans l'atmosphère extérieure gaz contenant moins de polluants. En résumé, grâce au dispositif, on peut réaliser à chaud une dépollution différée des gaz d'échappement qui sont produits à froid par le moteur.

De cette manière, un tel dispositif permet de limiter considérablement une pollution de l'atmosphère avec des gaz d'échappement partiellement traités ou non traités par le catalyseur. Le compresseur du circuit de dérivation est indépendant et autonome, et est distinct d'un compresseur qui serait couplé à une turbine pour former un turbocompresseur de suralimentation du moteur. Le compresseur du circuit de dérivation possède ainsi sa propre source énergétique apte à le faire fonctionner. Avantageusement, le circuit de dérivation comprend des moyens aptes à réguler le débit des gaz d'échappement transitant par ledit circuit, et des moyens de fermeture dudit circuit en fonction des besoins en matière de gaz d'échappement comprimés.

Avantageusement, un groupe motopropulseur selon l'invention comprend une première tubulure reliant le circuit d'échappement en aval du catalyseur et le compresseur, une deuxième tubulure reliant le compresseur et le réservoir, et une troisième tubulure reliant le réservoir au circuit d'échappement en amont du catalyseur. Le terme « tubulure » désigne tout type de conduit étanche, susceptible d'acheminer des gaz d'échappement d'un premier point A vers un second point B. Les tubulures peuvent être, soit souples, soit rigides.

De façon préférentielle, un groupe motopropulseur selon l'invention comprend une vanne d'entrée placée sur la deuxième tubulure et une vanne de sortie placée sur la troisième tubulure, lesdites vannes permettant de contrôler l'admission et le stockage des gaz comprimés dans le réservoir et leur libération dudit réservoir. De cette manière, les deux vannes encadrent le réservoir de gaz. La phase de chargement du réservoir en gaz d'échappement comprimés, la phase de stockage desdits gaz dans ledit réservoir et la phase de libération de ceux-ci, doivent s'effectuer à des moments précis d'utilisation du véhicule. La vanne d'entrée et la vanne de sortie permettent de contrôler ces différentes phases. Les vannes d'entrée et de sortie peuvent être, soit en tout ou rien, soit à ouverture variable pour pouvoir contrôler les flux de gaz, en entrée et en sortie du réservoir.

Préférentiellement, la vanne d'entrée et la vanne de sortie sont contrôlées électriquement. La source électrique étant déjà présente dans le véhicule pour d'autres besoins, il est facile d'élaborer un circuit électrique à partir de cette source, pour piloter les vannes. Selon un autre mode de réalisation, ces vannes peuvent également être contrôlées mécaniquement.

De façon avantageuse, un groupe motopropulseur selon l'invention, comprend un clapet d'entrée placé dans une zone d'intersection du circuit d'échappement et de la première tubulure, ledit clapet étant monté pivotant entre une première position pour laquelle il ouvre le circuit d'échappement et obture la première tubulure, et une deuxième position pour laquelle il obture le circuit d'échappement et ouvre la première tubulure. Ce clapet permet de dévier l'intégralité des gaz d'échappement issus du catalyseur vers le circuit de dérivation, à un moment précis d'utilisation du véhicule, et pour une période donnée. Préférentiellement, ce clapet est piloté au moyen d'une vanne. Le terme « d'entrée » attribué au clapet est fait en référence au circuit de dérivation. En effet, ce clapet d'entrée va gérer l'admission des gaz d'échappement dans le circuit de dérivation.

Avantageusement, un groupe motopropulseur selon l'invention comprend un clapet de sortie placé dans une zone d'intersection du circuit d'échappement et de la troisième tubulure, ledit clapet étant monté pivotant entre une première position pour laquelle il ouvre le circuit d'échappement et obture la troisième tubulure, et une deuxième position pour laquelle il obture le circuit d'échappement et ouvre la troisième tubulure. Ce clapet de sortie permet le passage des gaz d'échappement comprimés issus du circuit de dérivation, vers le circuit d'échappement en amont du catalyseur, à un moment précis d'utilisation du véhicule, et pour une période donnée. Préférentiellement, le clapet est piloté au moyen d'une vanne. Le terme « de sortie » attribué au clapet est fait en référence au circuit de dérivation. En effet, ce clapet de sortie va gérer la libération des gaz d'échappement du circuit de dérivation dans le circuit d'échappement.

De façon préférentielle, le compresseur est doté d'une soupape d'entrée fonctionnant en liaison avec les gaz prélevés en aval du catalyseur, et d'une soupape de sortie contrôlant les gaz comprimés destinés à être acheminés vers le réservoir. Ces soupapes permettent de contrôler le volume de gaz comprimés dans le compresseur en fonction de la pression régnant dans ledit compresseur.

Préférentiellement, l'entrainement du compresseur est réalisé au moyen d'une source électrique ou mécanique.

De façon avantageuse, le volume du réservoir de gaz est compris entre 0.5 litre et 20 litres. De cette manière, le réservoir demeure peu encombrant et donc compatible avec les espaces restreints laissés vacants dans le véhicule. Plus le volume du réservoir est élevé, plus une quantité importante de gaz d'échappement produite à froid peut être stockée, et plus la dépollution des gaz d'échappement est efficace.

Avantageusement, le circuit de dérivation est piloté par une unité centrale de calcul. Pour être plus précis, tous les éléments amenés à être présents dans un groupe motopropulseur selon l'invention, tels que par exemple, le compresseur, la vanne d'entrée, la vanne de sortie, le clapet d'entrée et le clapet de sortie sont commandés électroniquement en fonction de certains paramètres tels que par exemple la température des gaz d'échappement entrant dans le catalyseur, la phase d'utilisation du véhicule (durée écoulée depuis un démarrage à froid, phase de roulage du véhicule et notamment la charge du moteur...).

L'invention a pour autre objet un procédé de contrôle d'un groupe motopropulseur selon l'invention.

La principale caractéristique d'un procédé selon l'invention est qu'il comprend les étapes suivantes :
- Une étape d'acheminement des gaz d'échappement dans le circuit de dérivation, lorsqu'une valeur de température T des gaz d'échappement à l'entrée du catalyseur est inférieure à un premier seuil de température T1 prédéterminé, afin de remplir le réservoir en gaz comprimés,
- Une étape de stockage des gaz d'échappement comprimés dans le réservoir,
- Une étape de libération des gaz d'échappement comprimés dans le circuit d'échappement), lorsque ladite valeur de température T est supérieure à un second seuil de température T2 prédéterminé.

De préférence, le premier seuil de température T1 est égal à la température d'amorçage du catalyseur.

Préférentiellement, le premier seuil de température T1 est sensiblement égal à 350°C. Autrement dit, ledit premier seuil de température T1 est égal à 350°C plus ou moins 10°C.

Avantageusement, le second seuil de température T2 est plus élevé que le premier seuil de température T1.

De façon avantageuse, le second seuil de température T2 est sensiblement égal à 400°C, c'est-à-dire à 400°C plus ou moins 10°C. Ainsi, pendant le temps que la température des gaz d'échappement met à atteindre le second seuil de température, la température du catalyseur proprement dit a le temps d'augmenter jusqu'à la température d'amorçage par transfert d'énergie entre les gaz et le catalyseur.

De préférence, l'étape de libération est réalisée lorsque le moteur n'est pas chargé ou fonctionne à faible charge, c'est-à-dire lorsque le débit d'air admis dans le moteur est faible. En effet, dans ces conditions de faible débit d'air, le débit des gaz d'échappement produit par le moteur est faible également. On peut alors libérer, à partir du réservoir, un débit additionnel de gaz d'échappement comprimés sans que le débit total des gaz d'échappement traversant le catalyseur excède la capacité maximale de ce dernier.

Un groupe motopropulseur selon l'invention présente l'avantage de posséder une efficacité de dépollution globale élevée quelle que soit la phase d'utilisation du véhicule, même si le catalyseur n'est pas efficace dans les phases de fonctionnement à froid du véhicule, permettant ainsi de limiter considérablement les émissions de particules polluantes.

On donne ci-après, une description détaillée, d'un mode de réalisation préféré d'un groupe motopropulseur selon l'invention, en se référant aux figures suivantes :
- Les figure 1A et 1B sont des vues schématiques et partielle d'un groupe motopropulseur selon l'invention, respectivement sans et avec les flux gazeux,
- Les figures 2A et 2B sont deux vues en perspective et sous deux angles différents d'un groupe motopropulseur selon l'invention,
- La figure 3 est une vue de côté d'un catalyseur d'un groupe motopropulseur selon l'invention,
- La figure 4A est une vue partielle en perspective d'un catalyseur d'un groupe motopropulseur selon l'invention, montrant les flux gazeux à la sortie dudit catalyseur,
- Les figures 4B et 4C sont des vues de côté de la sortie du catalyseur de la figure 4A, montrant respectivement un flux gazeux vers le circuit d'échappement et vers le circuit de dérivation,
- Les figures 5A et 5B sont respectivement une vue en coupe et en perspective d'un compresseur d'un circuit de dérivation d'un groupe motopropulseur selon l'invention,
- La figure 6 est une vue en perspective d'un réservoir de gaz d'un circuit de dérivation d'un groupe motopropulseur selon l'invention,
- Les figures 7A et 7B sont des vues en coupe respectivement d'une vanne d'entrée et d'une vanne de sortie d'un réservoir d'un circuit de dérivation d'un groupe motopropulseur selon l'invention,
- La figure 8A est une vue partielle en perspective d'un catalyseur d'un groupe motopropulseur selon l'invention, montrant les flux gazeux à l'entrée dudit catalyseur,
- Les figures 8B et 8C sont des vues en perspective de l'entrée du catalyseur de la figure 8A, montrant respectivement un flux gazeux en amont du catalyseur arrivant respectivement du réservoir du circuit de dérivation et du circuit d'échappement.

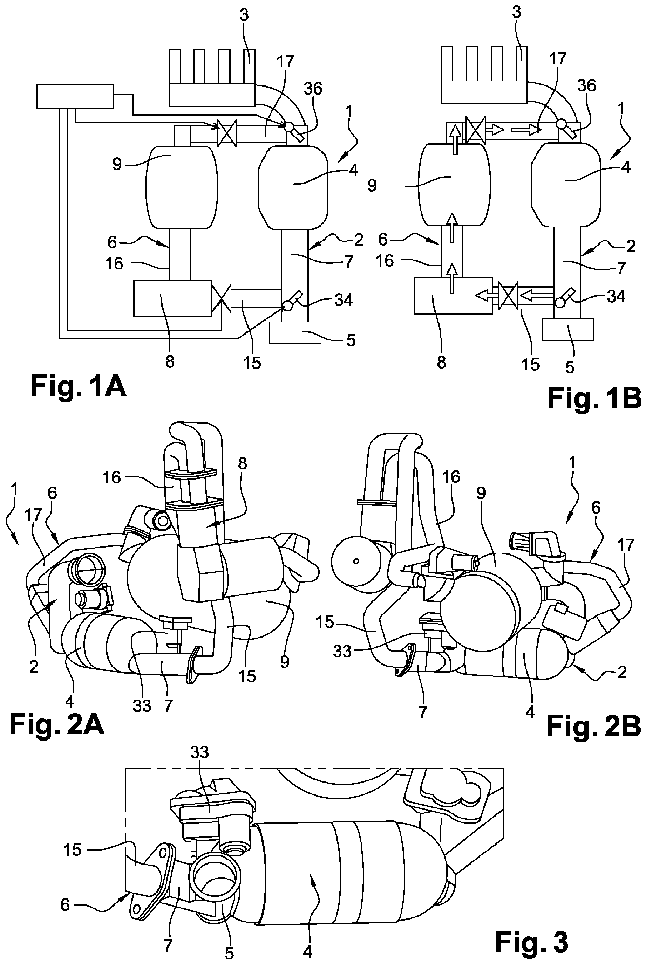

En se référant aux figure 1A, 1B, 2A et 2B un groupe motopropulseur 1 selon l'invention comprend schématiquement un circuit d'alimentation (non visible sur la figure) en air, un moteur (non visible sur la figure) et un circuit d'échappement 2 des gaz en provenance dudit moteur. Ce circuit d'échappement 2 prend naissance au niveau du moteur, et comprend dans l'ordre, un collecteur d'échappement 3, un catalyseur 4 et une bride d'échappement 5 par laquelle sont évacués dans l'atmosphère, les gaz d'échappement traités par ledit catalyseur 4. Pour rappel, le collecteur d'échappement 3 permet d'acheminer les gaz d'échappement en provenance des différentes chambres de combustion du moteur, vers un conduit de sortie commun en communication avec le catalyseur 4. De cette manière, les gaz d'échappement issus du collecteur d'échappement 3 passent obligatoirement par le catalyseur 4, où ils sont dépollués avant d'être évacués dans l'atmosphère extérieure par la bride 5. Un groupe motopropulseur 1 selon l'invention comprend un circuit de dérivation 6 des gaz d'échappement, prenant naissance sur le circuit d'échappement 2, au niveau d'une sortie 7 du catalyseur 4, et débouchant dans ledit circuit d'échappement 2 en amont dudit catalyseur 4, afin d'être réinjectés dans celui-ci. Les termes "amont" et sortie" sont à considérer par rapport au sens de circulation des gaz d'échappement dans le circuit d'échappement 2. Ce circuit de dérivation 6 comprend un compresseur 8 et un réservoir de gaz 9 placé en aval dudit compresseur 8, de sorte que les gaz d'échappement issus du catalyseur 4, lorsqu'ils sont déviés dans le circuit de dérivation 6, passent d'abord par le compresseur 8 où ils sont comprimés, avant de pénétrer dans ledit réservoir 9, où ils sont ensuite redirigés vers le catalyseur 4. Le terme "aval" est à considérer par rapport au sens de circulation des gaz dans le circuit de dérivation 6. Il est à noter que le compresseur 8 est distinct d'un compresseur composant un éventuel turbocompresseur de suralimentation du moteur. Ce compresseur 8 est spécifiquement dédié à la fonction particulière consistant à comprimer dans le circuit de dérivation 6 les gaz d'échappement issus du catalyseur 4. L'entrainement du compresseur 8 peut être, soit électrique, soit mécanique. Une première tubulure 15 relie le compresseur 8 et le circuit d'échappement 2 au niveau de la sortie 7 du catalyseur 4. Une deuxième tubulure 16 relie le compresseur 8 et le réservoir de gaz 9. Une troisième tubulure 17 relie le réservoir de gaz 9 au circuit d'échappement 2, en amont du catalyseur 4. La focntion de ce circuit de dérivation 6 est de comprimer et de stocker des gaz d'échappement produits à froid par le moteur et ayant déjà traversé le catalyseur 4 lorsque celui-ci n'a pas encore atteint sa température d'amorçage, puis de les réacheminer en amont du catalyseur 4 lorsque celui-ci est opérationnel, c'est-à-dire une fois qu'il a atteint sa température d'amorçage.

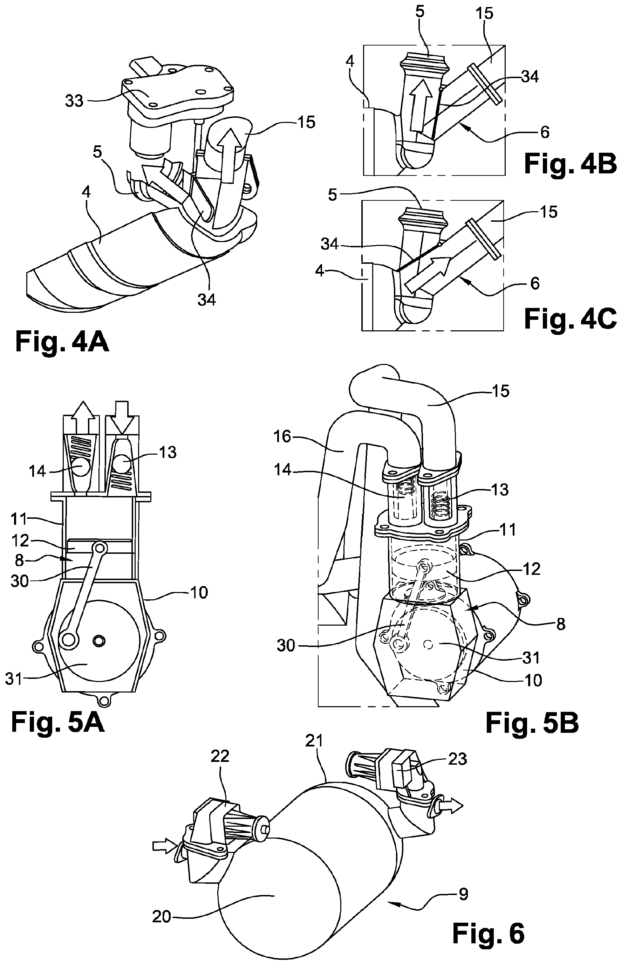

En se référant aux figures 5A et 5B le compresseur 8 est, de manière non limitative, une pièce creuse délimitée par une paroi 10 dont un tronçon 11 est sensiblement cylindrique. Il comprend un piston 12 cylindrique amené à coulisser à l'intérieur dudit tonçon 11 sous l'effet de la pression générée par les gaz d'échappement pénétrant dans ledit compresseur 8, et/ou sous l'effet d'une bielle 30 montée rotative, d'une part sur un cylindre 31 rotatif, et d'autre part sur le piston 12. De cette manière, le piston 12 peut se déplacer entre une position basse et une position haute dans le tronçon 11 cylindrique. Le flux de gaz transitant par le compresseur 8 est piloté par une soupape d'entrée 13 et par une soupape de sortie 14. La soupape d'entrée 13 est insérée dans la première tubulure 15 au niveau de l'entrée du compresseur 8, et la soupape de sortie 14 est insérée dans la deuxième tubulure 16 au niveau de la sortie du compresseur 9. Chacune desdites soupapes 13, 14 est constituée par une pièce allongée, apte à se déplacer en translation le long de son axe longitudinal entre une position d'ouverture et une position de fermeture obturant la tubulure 15, 16 dans laquelle elle est montée. La soupape d'entrée 13 et la soupape de sortie 14 sont placées de façon parallèle au sein du compresseur 8, et se déplacent chacune dans le même sens que celui du piston 12 dans le tronçon cylindrique 11 de la paroi 10 délimitant le compresseur 8.

Les gaz d'échappement prélevés après la sortie 7 du catalyseur 4, entrent dans le compresseur 8 à travers la soupape d'admission 13. Quand le piston 12 descend sous l'effet du cylindre rotatif 31, il crée une basse pression ou dépression, dans le compresseur 8, qui est inférieure à la pression des gaz dans le circuit d'échappement 2. La différence entre les deux pressions (dans le compresseur 8 et dans le circuit d'échappement 2) génère une force qui a comme résultat le déplacement de la soupape d'admission 13 depuis la position de fermeture vers la position d'ouverture. Les gaz pénètrent alors dans le compresseur 8.

Quand le piston 12 monte pour comprimer le gaz sous l'effet de la bielle 30 mue en rotation par le cylindre 31 rotatif, la pression à l'intérieur du compresseur 8 devient supérieure à la pression dans la deuxième tubulure 16, et donc la différence de pression entre les deux, a une action inverse sur la soupape d'admission 13, qui revient à la position de fermeture. La soupape de sortie 14 du compresseur 8 fonctionnant en sens inverse de celui de la soupape d'admission 13, s'ouvre alors sous l'effet de la surpression régnant dans le compresseur 8, libérant ainsi les gaz comprimés dans le compresseur 8 vers le réservoir 9. Quand la pression dans le compresseur 8 baisse sous l'effet du déplacement du piston 12 vers sa position basse, une dépression est créée dans le compresseur 8, engendrant la fermeture de la soupape de sortie 14 et une éventuelle ouverture de la soupape d'entrée 13.

En se référant à la figure 6, le réservoir de gaz 9 est de forme allongée et sensiblement cylindrique, et possède deux extrémités 20, 21 arrondies. Le réservoir 9 est conçu pour stocker les gaz d'échappement comprimés provenant du compresseur 8. Malgré l'augmentation de température T des gaz prélevés qui est due à la compression, il convient d'éviter toute déperdition de température pour ne pas refroidir inutilement le catalyseur 4 lors de la phase de réintroduction des gaz. Il est donc nécessaire que le réservoir 9 puisse être isolé, pour maintenir constante la température des gaz stockés. A cette fin, une vanne d'entrée 22 est placée sur la deuxième tubulure 16 entre le compresseur 8 et ledit réservoir 9, et une vanne de sortie 23 est placée sur la troisième tubulure 17, entre le réservoir 9 et le circuit d'échappement 2, au niveau d'une zone située en amont du catalyseur 4.

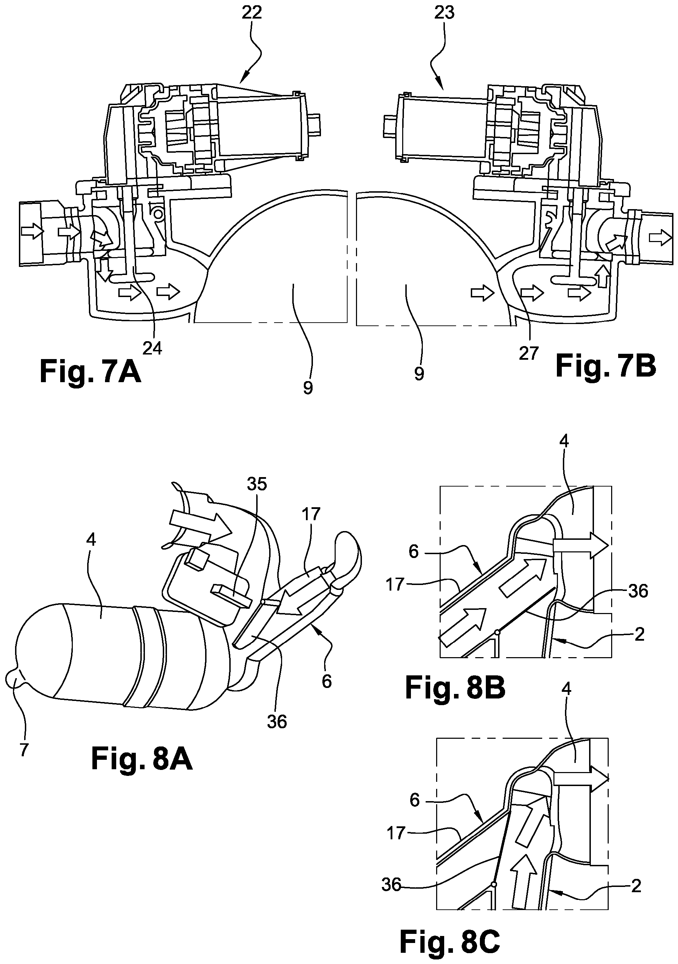

En se référant à la figure 7A, la vanne d'entrée 22 est nécessaire pour maintenir les gaz d'échappement comprimés à l'intérieur du réservoir 9, lorsque le compresseur 8 s'arrête de fonctionner. La vanne d'entrée 22 est commandée électriquement, et possède un piston 24 coulissant, apte à passer d'une position de fermeture correspondant à une position rétractée, à une position d'ouverture correspondant à une position déployée. Préférentiellement, cette vanne d'entrée est pilotée en tout ou rien. Cette vanne d'entrée 22 possède également, comme autre fonctionnalité une reprise de la soupape de sortie 14 du compresseur 8.

En se référant à la figure 7B, la vanne de sortie 23 du réservoir 9 permet de contrôler le débit du gaz qui sort dudit réservoir 9. Cette vanne de sortie 23 est commandée électriquement, et possède un piston 27 coulissant, apte à passer d'une position d'ouverture correspondant à une position déployée dudit piston 27, à une position de fermeture correspondant à une position rétractée.

En se référant à la figure 3, le catalyseur 4 a sensiblement une forme cylindrique et présente une entrée 32 et une sortie 7.

En se référant aux figures 3, 4A, 4B et 4C, une vanne 33 apte à piloter un clapet d'entrée 34, est placée au niveau de la sortie 7 du catalyseur 4. Le terme « entrée » attribué au clapet 34 situé à la sortie du catalyseur 4 est utilisé en référence au circuit de dérivation 6. En effet, ce clapet 34 est placé à l'entrée de ce circuit de dérivation 6. Le clapet d'entrée 34 est monté pivotant entre une première position pour laquelle il ouvre le circuit d'échappement 2 et obture la première tubulure 15 du circuit de dérivation comme illustré à la figure 4B, et une deuxième position pour laquelle il obture le circuit d'échappement 2 et ouvre la première tubulure 15 comme illustré à la figure 4C. Dans la première position le clapet d'entrée 34 permet de fermer le circuit de dérivation 6 et tous les gaz d'échappement sont évacués dans l'atmosphère extérieure en passant par le catalyseur 4 et par la bride d'échappement 5, sans traverser le circuit de dérivation 6. Dans la deuxième position, il permet d'acheminer, lorsque la température T des gaz d'échappement est inférieure à un premier seuil de température T1 prédéterminé T1, l'intégralité des gaz d'échappement ayant déjà traversé le catalyseur 4 vers le circuit de dérivation 6, afin que lesdits gaz soient comprimés, puis stockés dans le réservoir 9 avant d'être libérés via la troisième tubulure 17, dans le circuit d'échappement 2, en amont du catalyseur 4, lorsque la température T des gaz d'échappement est supérieure à un second seuil de température prédéterminé T2.

En se référant aux figures 8A, 8B et 8C, une vanne 35 apte à piloter un clapet de sortie 36, est placée au niveau de l'entrée 32 du catalyseur 4. Le terme « sortie » attribué au clapet 36 situé à l'entrée 32 du catalyseur 4, est utilisé en référence au circuit de dérivation 6. En effet, ce clapet 36 est placé à la sortie de ce circuit de dérivation 6. Le clapet de sortie 36 est monté pivotant entre une première position pour laquelle il ouvre le circuit d'échappement 2 et obture la troisième tubulure 17 du circuit de dérivation 6 comme illustré à la figure 8C, et une deuxième position pour laquelle il obture partiellement le circuit d'échappement 2 et ouvre la troisième tubulure 17, comme illustré à la figure 8B. Dans la première position, le clapet de sortie 36 permet de fermer le circuit de dérivation 6 et le catalyseur 4 n'est traversé que par des gaz d'échappement directement en provenance du collecteur d'échappement 3. Dans la deuxième position, il permet d'acheminer, lorsque la température T des gaz d'échappement est supérieure à un second seuil de température prédéterminé T2, des gaz d'échappement comprimés en provenance du réservoir 9 du circuit de dérivation 6, vers le catalyseur 4, comme illustré à la figure 8B. Dans cette deuxième position, le volet de sortie 36 limite l'arrivée des gaz d'échappement en provenance du collecteur d'échappement 3.

Les vannes 33, 35 contrôlant l'ouverture et la fermeture du clapet d'entrée 34 et du clapet de sortie 36 sont préférentiellement des électrovannes.

Le compresseur 8 équipé de ses soupapes 13, 14 et de son piston 12, la vanne d'entrée 22, la vanne de sortie 23, le clapet d'entrée 34 et le clapet de sortie 36 sont pilotés automatiquement par une unité centrale de calcul embarquée dans le véhicule. Ainsi, en fonction de certains paramètres, tels que par exemple, la température des gaz d'échappement traversant le catalyseur 4, la phase d'utilisation du véhicule (durée écoulée depuis le démarrage à froid, phase de roulage et notamment la charge du moteur),, cette unité centrale va permettre de stocker une réserve de gaz comprimés dans le réservoir 9, et de libérer cette quantité de gaz comprimé à dans des conditions appropriées.

Pour résumer, les deux vannes 23, 24 placées de part et d'autre du réservoir de gaz 9 permettent de gérer l'admission des gaz d'échappement comprimés dans ledit réservoir 9, leur stockage dans celui et enfin leur libération pour alimenter le catalyseur 4. Le clapet d'entrée 34 et le clapet de sortie 36 gèrent le passage des gaz d'échappement dans le circuit de dérivation 6, et leur acheminement éventuel en amont dudit catalyseur 4.

La température T des gaz d'échappement est par exemple mesurée par un capteur de température (non représenté sur les figures) monté dans le circuit d'échappement 2 juste en amont du catalyseur 4.

Un procédé de contrôle d'un groupe motopropulseur selon l'invention, comprend les principales étapes suivantes :
- Une étape d'acheminement des gaz d'échappement dans le circuit de dérivation 6, lorsque la température T des gaz d'échappement à l'entrée du catalyseur est inférieure à un premier seuil de température T1, afin de remplir le réservoir 9 en gaz comprimés,
- Une étape de stockage des gaz comprimés dans ledit réservoir 9,
- Une étape de libération des gaz comprimés dans le réservoir 9 vers le circuit d'échappement 2 en amont du catalyseur 4, lorsque la température T des gaz d'échappement à l'entrée du catalyseur est supérieure à un second seuil de température prédéterminé.

De préférence, le premier seuil de température T1 est égal à la température d'amorçage du catalyseur, par exemple une température sensiblement égale à 350°C.

De préférence, le second seuil de température T2 est supérieur au premier seuil T1, par exemple sensiblement égal à 400°C.

Autrement dit, le circuit de dérivation 6 permet de comprimer et de stocker les gaz d'échappement produits à froid par le moteur, c'est-à-dire lorsque le catalyseur présente une faible efficacité de dépollution, et de libérer ces gaz comprimés à un moment plus opportun, c'est-à-dire à chaud, lorsque le catalyseur a atteint une efficacité suffisante. Il s'agit en résumé d'un procédé de traitement différé des gaz d'échappement d'un moteur.

## Revendications

1. Groupe motopropulseur (1) d'un véhicule comprenant un moteur à combustion interne et un circuit d'échappement (2) des gaz en provenance dudit moteur, ledit circuit comportant un catalyseur (4), **caractérisé en ce qu'**il comprend un circuit de dérivation (6) des gaz d'échappement, prenant naissance dans le circuit d'échappement (2) en aval (7) du catalyseur (4) et débouchant dans ledit circuit d'échappement (2) en amont dudit catalyseur (4), et **en ce que** le circuit de dérivation (6) comprend un compresseur (8) et un réservoir (9) positionné en aval dudit compresseur (8), ledit circuit de dérivation (6) étant destiné à injecter des gaz d'échappement comprimés en amont du catalyseur (4).

2. Groupe motopropulseur selon la revendication 1, **caractérisé en ce qu'**il comprend une première tubulure (15) reliant le circuit d'échappement (2, 7) en aval du catalyseur (4) et le compresseur (8), une deuxième tubulure (16) reliant le compresseur (8) et le réservoir (9), et une troisième tubulure (17) reliant le réservoir (9) au circuit d'échappement (2) en amont du catalyseur (4).

3. Groupe motopropulseur selon la revendication 2, **caractérisé en ce qu'**il comprend une vanne d'entrée (22) placée sur la deuxième tubulure (16) et une vanne de sortie (23) placée sur la troisième tubulure (17), lesdites vannes (22, 23) permettant de contrôler l'admission et le stockage des gaz comprimés dans le réservoir (9) et leur libération dudit réservoir (9).

4. Groupe motopropulseur selon la revendication 3, **caractérisé en ce que** la vanne d'entrée (22) et la vanne de sortie (23) sont contrôlées électriquement.

5. Groupe motopropulseur selon l'une quelconque des revendications 2 à 4, **caractérisé en ce qu'**il comprend un clapet d'entrée (34) placé dans une zone d'intersection du circuit d'échappement (2) et de la première tubulure (15), et **en ce que** ledit clapet (34) est monté pivotant entre une première position pour laquelle il ouvre le circuit d'échappement (2) et obture la première tubulure (15), et une deuxième position pour laquelle il obture le circuit d'échappement (2) et ouvre la première tubulure (15).

6. Groupe motopropulseur selon l'une quelconque des revendications 2 à 5, **caractérisé en ce qu'**il comprend un clapet de sortie (36) placé dans une zone d'intersection du circuit d'échappement (2) et de la troisième tubulure (17), et **en ce que** ledit clapet (36) est monté pivotant entre une première position pour laquelle il ouvre le circuit d'échappement (2) et obture la troisième tubulure (17), et une deuxième position pour laquelle il obture le circuit d'échappement (2) et ouvre la troisième tubulure (17).

7. Groupe motopropulseur selon l'une quelconque des revendications 1 à 6, **caractérisé en ce que** le compresseur (8) est doté d'une soupape d'entrée (13) fonctionnant en liaison avec les gaz prélevé en aval du catalyseur (4), et d'une soupape de sortie (14) contrôlant les gaz comprimés destinés à être acheminés vers le réservoir (9).

8. Groupe motopropulseur selon l'une quelconque des revendications 1 à 7, **caractérisé en ce que** le volume du réservoir (9) de gaz est compris entre 0.5 litre et 20 litres.

9. Groupe motopropulseur selon l'une quelconque des revendications 1 à 8, **caractérisé en ce que** le circuit de dérivation (6) est piloté par une unité centrale de calcul.

10. Procédé de contrôle d'un groupe motopropulseur selon l'une quelconque des revendications 1 à 9, **caractérisé en ce qu'**il comprend les étapes suivantes :
- Une étape d'acheminement des gaz d'échappement dans le circuit de dérivation (6), lorsqu'une valeur de température (T) des gaz d'échappement à l'entrée du catalyseur (4) est inférieure à un premier seuil de température (T1) prédéterminé, afin de remplir le réservoir (9) en gaz comprimés,
- Une étape de stockage des gaz d'échappement comprimés dans le réservoir (9),
- Une étape de libération des gaz d'échappement comprimés dans le circuit d'échappement (2), lorsque ladite valeur de température (T) est supérieure à un second seuil de température (T2) prédéterminé.

11. Procédé selon la revendication 10, **caractérisé en ce que** l'étape de libération des gaz d'échappement comprimés est réalisée lorsque le moteur n'est pas chargé ou fonctionne à faible charge.

12. Procédé selon l'une quelconque des revendications 10 ou 11, **caractérisé en ce que** le premier seuil (T1) est égal à la température d'amorçage du catalyseur (4).

13. Procédé selon la revendication 12, **caractérisé en ce que** le premier seuil de température (T1) est sensiblement égal à 350°C

14. Procédé selon la revendication 13, **caractérisé en ce que** le second seuil de température (T2) est sensiblement égal à 400°C.
